# EUROPÄISCHE PATENTSCHRIFT

(11) **EP 1 262 757 B1**
(45) Veröffentlichungstag und Bekanntmachung des Hinweises auf die Patenterteilung: **04.01.2006**
(21) Anmeldenummer: 02011783.4
(22) Anmeldetag: 28.05.2002
(51) Int. Cl.: G01M 3/18, G01M 3/40, G01M 3/04, F17D 5/00

(54) **Überwachungsvorrichtung von Flüssigkeit führenden Rohrleitungen**
Apparatus for monitoring liquid-carrying pipes
Dispositif de surveillance des conduites transportant des liquides

(30) Priorität: 01.06.2001 DE 10126693
(43) Veröffentlichungstag der Anmeldung: 04.12.2002
(73) Patentinhaber: SZENO Engineering Othmar Käslin, 6370 Stans (CH)
(72) Erfinder: Käslin, Othmar, CH-6373 Ennetbürgen (CH); Waldvogel, Cornel, CH-6064 Kerns (CH)
(74) Vertreter: Maucher, Wolfgang

(56) Entgegenhaltungen:
- FR-A- 1 403 430
- FR-A- 2 393 269
- FR-A- 2 709 170
- US-A- 1 786 843

## Beschreibung

Die Erfindung bezieht sich auf eine Vorrichtung zur Überwachung von Flüssigkeit führenden Rohrleitungen auf Undichtigkeit, die eine Halterung mit einer Durchtrittsöffnung für die zu überwachende Rohrleitung aufweist und die einen außenseitig an der Rohrleitung anbringbaren Flüssigkeits-Zwischenspeicher sowie einen Flüssigkeitssensor hat, der mit einer Steuerelektronik und diese mit einer Alarmeinrichtung verbunden ist.

Immer wieder kommt es vor, dass undichte Wasserleitungen in Gebäuden zu sehr großen Schäden führen. Es handelt sich dabei vor allem um Leitungen, welche verdeckt geführt werden und somit einer regelmäßigen Kontrolle entzogen sind.
Besonders gefährdet sind dabei die flexiblen Leitungen, welche für den Anschluss von Geräten und Wasserarmaturen eingesetzt werden.
Zur Feuchtigkeitsüberwachung ist eine Vorrichtung bekannt, die auf den Boden gestellt wird und ab einem bestimmten Wasserstand ein Warnsignal abgibt.
Problematisch ist bei dieser Vorrichtung, dass bei einer Alarmierung bereits ein gewisser Wasserstand vorhanden ist und dadurch schon ein erheblicher Schaden eingetreten sein kann.
Weiterhin kennt man aus der US-A-1 786 843 eine Vorrichtung zur Überwachung von Rohrleitungen, die als Alarmgeber eine ringförmige, die Rohrleitung umgreifende Auffangrinne für Leckflüssigkeit hat, wobei in der Auffangrinne elektrische Leiter angeordnet sind, die mit einer Alarm- und Anzeigevorrichtung verbunden sind. Die Alarm- und Anzeigevorrichtung kann mit mehreren, an Rohrleitungen angebrachten Alarmgeber verbunden sein. Diese Überwachungs-vorrichtung kann nur an vertikalen Rohrleitungen angebracht werden, weil in der Auffangrinne ein bestimmter Flüssigkeits-Füllstand erforderlich ist, um die darin angeordneten elektrischen Leiter zu überbrücken. Außerdem ist die Montage der gesamten Einrichtung mit ihren Einzelkomponenten aufwendig und umständlich.

Auch die FR-A-2 709 170 zeigt eine Überwachungs-Vorrichtung für Rohrleitungen, wobei an vertikalen Rohren Leckageflüssigkeit in ringförmigen Sammelbecken aufgefangen wird und dort befindliche Elektroden überbrückt. Dies wird bei einer an die Elektroden angeschlossenen Auswertezentrale angezeigt. Zur Überwachung horizontaler Rohre wird aus diesen austretende Leckflüssigkeit in einer Rinne aufgefangen und über ein vertikales Rohr abgeleitet, an dessen Innenseite durch zwei Ringe gebildete Elektroden angeordnet sind, welche durch die Leckflüssigkeit überbrückt werden. Auch diese Einrichtung ist aufwendig und umständlich.

Aufgabe der vorliegenden Erfindung ist es, eine Überwachungs-vorrichtung der eingangs erwähnten Art zu schaffen, die rechtzeitig vor dem Eintreten eines größeren Schadens warnt, die unkompliziert und kostengünstig ist und die auch von Laien einfach einsetzbar ist.

Zur Lösung dieser Aufgabe wird vorgeschlagen, dass die Vorrichtung als mobiles Klein- beziehungsweise Handgerät mit einem Gehäuse ausgebildet ist, in dem zumindest der Flüssigkeits-Zwischenspeicher, der Flüssigkeitssensor, die Steuerelektronik sowie die Alarmeinrichtung untergebracht sind, dass das Gehäuse zwei in ihrer Außenkontur etwa gleiche Gehäuseteile aufweist, die so ausgebildet sind, dass das Gehäuse in geschlossener Lage eine Durchtrittsöffnung zur Aufnahme des zu umschließenden Rohrabschnittes hat, dass bei der Durchtrittsöffnung der Flüssigkeits-Zwischenspeicher angeordnet ist und mit dem Flüssigkeitssensor in Kontakt steht und dass der lichte Querschnitt der Durchtrittsöffnung derart bemessen ist, dass die Vorrichtung längsverschiebbar auf einer zu überwachenden Rohrleitung anbringbar ist.

Diese Überwachungsvorrichtung wird zweckmäßigerweise an der tiefsten Stelle einer Rohrleitung befestigt, zum Beispiel bei flexiblen Leitungen an der Durchhangstelle, so dass im Leitungsverlauf auftretende Leckagen sicher erfasst werden können, indem die zur tiefsten Stelle der Rohrleitung fließende und sich dort ansammelnde Flüssigkeit durch den Flüssigkeitssensor registriert und dann Alarm ausgelöst wird, ehe Schaden angerichtet wird. Das beispielsweise faustgroße Gerät kann auch unter beengten Verhältnissen, wie sie oft bei Rohrleitungs-Führungen vorliegen, gut eingesetzt werden.
Zum Ansetzen der Vorrichtung an eine Rohrleitung kann das aus zwei Gehäuseteilen bestehende Gehäuse geöffnet und im Bereich der Durchtrittsöffnung die Rohrleitung umschließend wieder geschlossen werden. Die Längsverschiebbarkeit auf einer zu überwachenden Rohrleitung ergibt eine einfache Handhabung beim Positionieren des Gerätes an einer passenden Stelle der Rohrleitung.
Der Flüssigkeits-Zwischenspeicher hat den Vorteil, dass erst ab einer bestimmten Flüssigkeitsmenge Alarm ausgelöst wird.

Das Maß der Zwischenspeicherung und die Ansprechschwelle des Sensors kann je nach Anwendungsfall und Flüssigkeitsart unterschiedlich bemessen sein. Insbesondere kann damit ein Ansprechen der Überwachungsvorrichtung bei an der Rohrleitung auftretendem Schwitzwasser und somit ein Fehlalarm vermieden werden.
Zweckmäßigerweise ist der Flüssigkeits-Zwischenspeicher ein durch einen Schwamm gebildetes Feuchtigkeitsaufnahmeteil, der in einem als Schutzkorb ausgebildeten, ringförmigen, Öffnungen aufweisenden Aufnahmeteil innerhalb der für die zu überwachende Rohrleitung vorgesehenen Gehäuse-Durchtrittsöffnung angeordnet ist.
Durch den Schutzkorb ist der Schwamm, der durch einen Schwamm-Streifen gebildet sein kann, gut geschützt untergebracht, hat aber wegen der Öffnungen im Schutzkorb trotzdem Kontakt zu einer durchgeführten Rohrleitung.

Eine vorteilhafte Ausführungsform sieht vor, dass die Halterung zum verbinden der Vorrichtung mit der zu überwachenden Rohrleitung diese zangen-, schellen- oder manschettenartig umschließend ausgebildet ist. Durch die das Rohr umfänglich umschließende Halterung wird ausgeschlossen, dass Flüssigkeit unbemerkt an der Überwachungsvorrichtung vorbeifließt.

Bevorzugt ist der Sensor durch einen den elektrischen Widerstand messenden Widerstands-Sensor gebildet, der wenigstens zwei zueinander beabstandete, mit dem Feuchtigkeitsaufnahmeteil in Berührung stehende Elektroden aufweist.
Ein solcher Sensor ist besonders einfach und kostengünstig und ermöglicht auch eine einfache Auswerteschaltung für die Steuerelektronik.
Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: eine mit einer Rohrleitung verbundene, erfindungsgemäße Überwachungs-Vorrichtung,
- Fig. 2: eine perspektivische Darstellung der Überwachungs-Vorrichtung in aufgeklappter Lage,
- Fig. 3: eine Seitenansicht der Überwachungs-Vorrichtung,
- Fig. 4: eine Schnittdarstellung der Überwachungseinrichtung gemäß der Schnittlinie IV-IV in Fig.3 und
- Fig. 5: eine perspektivische Darstellung der Überwachungs-Vorrichtung.

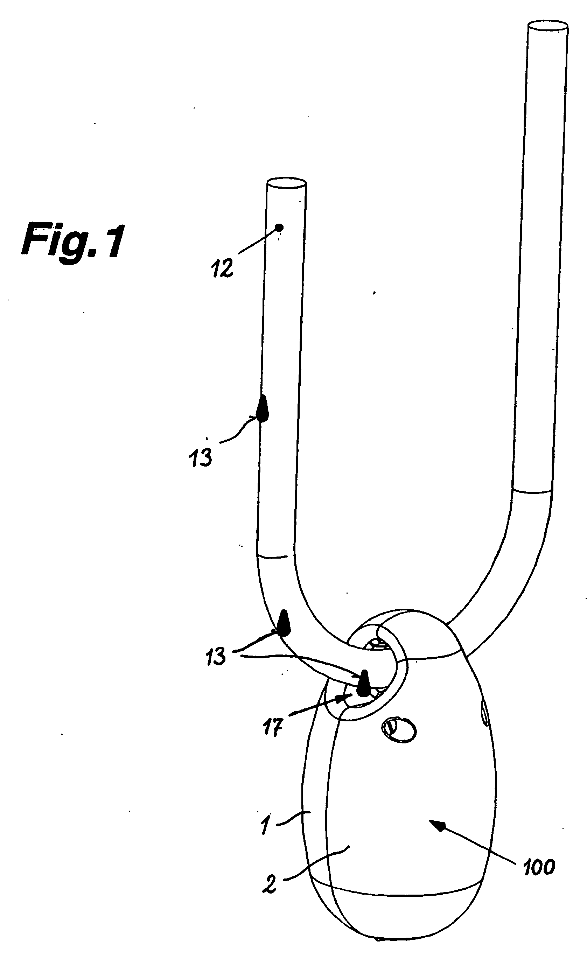

Eine in Fig.1 gezeigte Überwachungs-Vorrichtung 100 dient zur Überwachung einer Flüssigkeit führenden Rohrleitung 12 auf Undichtigkeit. Die Vorrichtung ist an der tiefsten Stelle der Rohrleitung 12 angeordnet, so dass Leckwasser 13, das im Ausführungsbeispiel gemäß Fig. 1 durch einige Tropfen dargestellt ist, an dieser Rohrleitung 12 nach unten läuft und sich dann dort ansammelt, so die Überwachungs-Vorrichtung angeordnet ist.

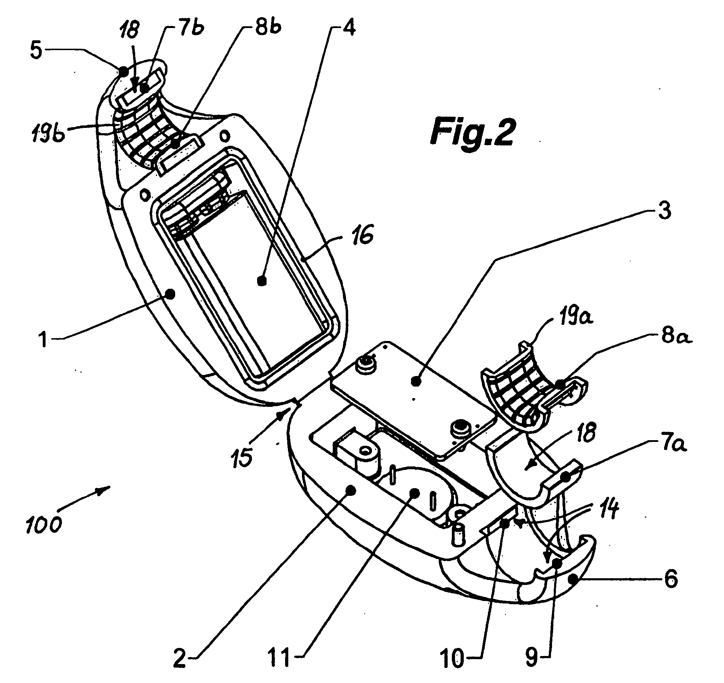

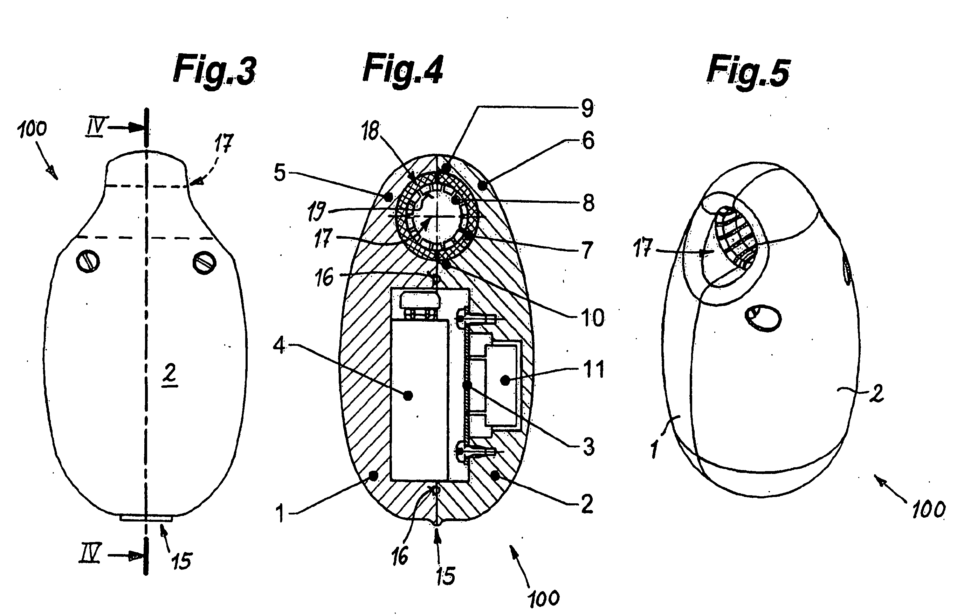

Die Vorrichtung hat wenigstens einen Flüssigkeitssensor 14 (vgl. Fig.2 und 4), mit dem Flüssigkeit detektiert und über eine Steuerelektronik ein akustischer Alarm mit Hilfe eines Alarmgebers 11 ausgelöst werden kann.
Die Überwachungs-Vorrichtung 100 ist, wie in den Ausführungsbeispielen etwa maßstäblich dargestellt, als kleines Handgerät ausgebildet, das alle Funktionsteile beinhaltet. Der detaillierte Aufbau ist besonders gut in Fig.2 erkennbar.
Die Vorrichtung weist zwei etwa gleiche Gehäuseteile 1 und 2 auf, die an ihrem einen Ende durch ein Klappscharnier 15 miteinander verbunden sind. Um dieses Klappscharnier lassen sich die beiden Gehäuseteile 1 und 2 auf- und zuschwenken. In Schließlage (Fig.3 bis 5) liegen die einander zugewandten Innenseiten der Gehäuseteile 1 und 2 aneinander, wobei das Gehäuseinnere, in dem sich verschiedene Einbauteile befinden, durch eine Ringdichtung 16 nach außen abgedichtet ist.
Auf der dem Klappscharnier 15 abgewandten Seite weisen die Gehäuseteile 1 und 2 jeweils schalenförmige Ausnehmungen 5 und 6 auf, die in geschlossener Lage des Gehäuses eine Durchtrittsöffnung 17 zur Aufnahme des zu umschließenden Rohrabschnittes bilden. Die schalenförmigen Ausnehmungen 5 und 6 bilden somit eine zangenförmige Halterung, über die das Überwachungsgerät mit dem Rohr verbunden ist.
Im Bereich der schalenförmigen Ausnehmungen 5, 6 ist der Flüssigkeitssensor 14 angeordnet. Zwischen dem Flüssigkeitssensor 14 und der Rohrwandung befindet sich ein Feuchtigkeitsaufnahmeteil 18. Dieses ist im Ausführungsbeispiel durch einen Schwamm 7 gebildet, der in einem einen Schutzkorb 8 bildenden Aufnahmeteil 19 eingesetzt ist. Das ringförmige Aufnahmeteil 19 ist durch zwei im Querschnitt U-förmige Halbringe 19a, 19b, gebildet, in denen jeweils halbkreisförmige Schwammstreifen gehalten sind. Diese Schwammstreifen berühren sich an ihren in der Gehäusetrennebene liegenden Stirnenden, wie dies in Fig. 4 erkennbar ist. Dadurch wird anfallende Feuchtigkeit gut innerhalb des gesamten Schwammes 7 verteilt.
Das Schwamm-Aufnahmeteil 19 hat schlitzförmige Öffnungen, um einen Durchtritt von Flüssigkeit zu dem Schwamm 7 zu ermöglichen. Durch das einen Schutzkorb 8 bildende Aufnahmeteil 19 kommt der Schwamm 7 nicht direkt mit der Rohrleitung 12 in Verbindung, so dass Beschädigungen, beispielsweise bei einem Längsverschieben der Überwachungs-Vorrichtung auf der Rohrleitung 12 vermieden werden.

Die schalenförmigen Gehäuse-Ausnehmungen 5,6 sind zur Aufnahme der Aufnahmeteil-Halbringe 19a, 19b, geformt. Im Ausführungsbeispiel ist der Flüssigkeitssensor 14 als Widerstands-Sensor mit zwei zueinander beabstandeten Elektroden 9 und 10 ausgebildet. Die Elektroden befinden sich im Ausführungsbeispiel in der einen schalenförmigen Ausnehmung 6 an diametral gegenüberliegenden Stellen nahe der Innenseite des Gehäuseteiles 2. Bedarfsweise können Sensor-Elektroden auch an anderer Stelle angeordnet sein oder es können mehr als zwei Elektroden vorgesehen sein. Dabei können diese Elektroden oder Sensoren auch in dem anderen Gehäuseteil 1 untergebracht sein.
In Funktionsstellung stehen die Elektroden 9,10 in direktem Kontakt zu dem Schwammteil 7a, dessen Stirnenden die Stirnenden des anderen Schwammteiles 7b berühren. Dadurch kann anfallende Feuchtigkeit über den Schwamm ringsherum übertragen werden, so dass unabhängig von der jeweiligen Benetzungsstelle die Feuchtigkeit bis zu den im Umfangsbereich prinzipiell beliebig angeordneten Sensoren oder Elektroden gelangt.
Die Sensor-Elektroden 9 und 10 stehen mit einer im Inneren des Gehäuses angeordneten Steuerelektronik 3 in Verbindung, mittels der der elektrische Widerstand zwischen den beiden Elektroden 9 und 10 ausgewertet wird. Saugt sich der Schwamm 7 mit Wasser oder dergleichen leitender Flüssigkeit voll, ändert sich sein elektrischer Widerstand. Diese Veränderungen werden von der Steuerelektronik 3 erkannt. Sobald der Widerstand einen vorgebbaren Wert unterschreitet, erfolgt mit einem akustischen Signalgeber 11 die Alarmauslösung oder gegebenenfalls auch eine Weitergabe des Alarms an ein entsprechendes System, das extern angeordnet sein kann.
Die Stromversorgung der Steuerelektronik 3 und des Signalgebers 11 erfolgt mit Hilfe einer ebenfalls im Gehäuseinneren untergebrachten Batterie 4. Wenn die Energie der Batterie zur Neige geht, erfolgt ebenfalls eine akustische Signalisierung, deren Signalfolge sich von der bei einem Leckalarm unterscheiden kann.

In jedem Gehäuseteil 1 und 2 sind gegenüberliegende Ausnehmungen vorgesehen, in denen einerseits die Batterie 4 und andererseits die Steuerelektronik 3 sowie der Alarmgeber 11 untergebracht sind. Dies ist auch gut in Fig.4 erkennbar. Die beiden Ausnehmungen bilden zusammen das Gehäuseinnere, welches durch die umlaufende Ringdichtung 16 bei zugeklappten Gehäuseteilen nach außen hin abgedichtet ist. Ein Eindringen von Flüssigkeit aus dem direkt mit der Rohrleitung 12 kontaktierenden Bereich wird dadurch vermieden.
Erwähnt sei noch, dass die erfindungsgemäße Überwachungs-Vorrichtung 100 insbesondere zur Lecküberwachung von Wasserleitungsrohren eingesetzt werden kann, dass jedoch bei Verwendung entsprechender Sensoren auch Leitungen, die nichtleitende Flüssigkeiten führen, überwacht werden können.

Die Durchtrittsöffnung 17 für die Rohrleitung 12 kann so bemessen sein, dass sie entweder dem Außendurchmesser der Rohrleitung entspricht oder aber auch etwas größer ist, so dass Rohrleitungen mit unterschiedlichem Durchmesser überwacht werden können, was insbesondere bei schlaufenförmig geführten Rohrleitungen, wo sich die Überwachungs-Vorrichtung an der tiefsten Stelle befindet, gut möglich ist. Weiterhin besteht die Möglichkeit, den Schutzkorb 8 mit darin befindlichem Schwamm 7 als Adapterteil auszubilden und mehrere solcher Adapterteile mit unterschiedlichen Durchtrittsöffnungen 17, jedoch gleichen Außendurchmessern 3 bereitzuhalten. Schließlich sind auch noch Ausführungsformen möglich, bei denen das Aufnahmeteil 19 als Federmanschette ausgebildet ist, die je nach vorhandenem Rohrleitungs-Querschnitt selbstanpassend ist und auch bei unterschiedlichen Rohrleitungs-Querschnitten die Rohrleitung dicht umschließt.

Anstatt eines aufklappbaren Gehäuses kann dieses auch im Bereich der schalenförmigen Ausnehmungen 5 und 6 zangenförmig aufklappbar sein, so dass der übrige Gehäusebereich beim Ansetzen an einer Rohrleitung geschlossen bleiben kann.

## Patentansprüche

1. Vorrichtung (100) zur Überwachung von Flüssigkeit führenden Rohrleitungen auf Undichtigkeit, die eine Halterung mit einer Durchtrittsöffnung (17) für die zu überwachende Rohrleitung (12) aufweist und die einen außenseitig an der Rohrleitung (12) anbringbaren Flüssigkeits-Zwischenspeicher (18) sowie einen Flüssigkeitssensor (14) hat, der mit einer Steuerelektronik (3) und diese mit einer Alarmeinrichtung verbunden ist, **dadurch gekennzeichnet, dass** die Vorrichtung (100) als mobiles Klein- beziehungsweise Handgerät mit einem Gehäuse ausgebildet ist, in dem zumindest der Flüssigkeits-Zwischenspeicher (18), der Flüssigkeitssensor (14), die Steuerelektronik (3) sowie die Alarmeinrichtung untergebracht sind, dass das Gehäuse zwei in ihrer Außenkontur etwa gleiche Gehäuseteile (1,2) aufweist, die so ausgebildet sind, dass das Gehäuse in geschlossener Lage eine Durchtrittsöffnung (17) zur Aufnahme des zu umschließenden Rohrabschnittes hat, dass bei der Durchtrittsöffnung (17) der Flüssigkeits-Zwischenspeicher (18) angeordnet ist und mit dem Flüssigkeitssensor (14) in Kontakt steht und dass der lichte Querschnitt der Durchtrittsöffnung (17) derart bemessen ist, dass die Vorrichtung (100) längsverschiebbar auf einer zu überwachenden Rohrleitung (12) anbringbar ist.

2. Vorrichtung nach Anspruch 1, **dadurch gekennzeichnet, dass** die Gehäuseteile (1,2) an einem Ende durch ein Klappscharnier (15) miteinander verbunden sind und auf der dem Klappscharnier (15) abgewandten Seite jeweils schalenförmige Ausnehmungen (5,6) aufweisen, die in geschlossener Lage des Gehäuses die Durchtrittsöffnung (17) bilden und dass innerhalb der die Durchtrittsöffnung (17) aufweisenden, schalenförmige Ausnehmungen (5,6) der Flüssigkeits-Zwischenspeicher (18) angeordnet ist.

3. Vorrichtung nach Anspruch 1 oder 2, **dadurch gekennzeichnet, dass** die Halterung zum Verbinden der Vorrichtung (100) mit der zu überwachenden Rohrleitung (12) diese zangen-, schellen- oder manschettenartig umschließend ausgebildet ist.

4. Vorrichtung nach Anspruch 2 oder 3, **dadurch gekennzeichnet, dass** das Innere des Gehäuses, in dem die Steuerelektronik (3), gegebenenfalls eine Batterie (4) sowie ein Alarmgeber (11) untergebracht sind, durch eine umlaufende Dichtung (16) nach außen abgedichtet ist, dass wenigstens ein Sensor (14) im Bereich der schalenförmigen Ausnehmungen (5,6) angeordnet ist und dass zum Zusammenhalten der Gehäuseteile (1,2) Schraubverbindungen oder Rastverbindungen vorgesehen sind.

5. Vorrichtung nach einem der Ansprüche 1 bis 4, **dadurch gekennzeichnet, dass** der Flüssigkeits-Zwischenspeicher (18) ein durch einen Schwamm (7) gebildetes Feuchtigkeitsaufnahmeteil ist, der in einem als Schutzkorb (8) ausgebildeten, ringförmigen, Öffnungen aufweisenden Aufnahmeteil (19) innerhalb der für die zu überwachende Rohrleitung (12) vorgesehenen Durchtrittsöffnung (17) angeordnet ist.

6. Vorrichtung nach Anspruch 5, **dadurch gekennzeichnet, dass** das ringförmige Aufnahmeteil (19) durch zwei im Querschnitt U-förmige Halbringe (19a,19b) gebildet ist, in denen die jeweils halbkreisförmigen Schwammteile sich an ihren Stirnenden berührend, gehalten ist.

7. Vorrichtung nach Anspruch 6, **dadurch gekennzeichnet, dass** die schalenförmigen Gehäuse-Ausnehmungen (5,6) zur Aufnahme der Aufnahmeteil-Halbringe (19a,19b) mit den Schwammteilen geformt sind und dass zumindest ein Sensor (14) in der Wandung zumindest eines der beiden Gehäuse-Ausnehmungen (5,6) vorgesehen ist, der ein Schwammteil kontaktiert.

8. Vorrichtung nach Anspruch 6 oder 7, **dadurch gekennzeichnet, dass** das in die schalenförmigen Gehäuse-Ausnehmungen (5,6) einsetzbare Aufnahmeteil (19) als Adapter für unterschiedliche Rohrleitungs-Durchmesser auswechselbar ist und dass mehrere Aufnahmeteile (19) mit unterschiedlichem Innendurchmesser vorgesehen sind.

9. Vorrichtung nach einem der Ansprüche 1 bis 8, **dadurch gekennzeichnet, dass** der Sensor (14) durch einen den elektrischen Widerstand messenden Widerstands-Sensor gebildet ist, der wenigstens zwei zueinander beabstandete, mit dem Flüssigkeits-Zwischenspeicher (18) in Berührung stehende Elektroden (9,10) aufweist.

10. Vorrichtung nach Anspruch 9, **dadurch gekennzeichnet, dass** die zwei Elektroden (9,10) des Widerstands-Sensors etwa diametral gegenüberliegend in der Wandung einer der schalenförmigen Gehäuse-Ausnehmungen (5,6) angeordnet sind.

11. Vorrichtung nach einem der Ansprüche 1 bis 10, **dadurch gekennzeichnet, dass** sie einen Anschluss für eine externe Stromversorgung und/oder für eine externe Alarmiereinrichtung aufweist.

## Claims

1. Apparatus (100) for monitoring liquid-carrying pipes for leaks, which comprises a holder with an opening (17) for the pipe (12) that is to be monitored, and which has an intermediate liquid store (18) adapted to be mounted on the outside of the pipe (12) and a liquid sensor (14) which is connected to an electronic control (3), the latter being connected to an alarm device, **characterised in that** the apparatus (100) is constructed as a mobile small-scale or hand-held device with a housing which accommodates at least the intermediate liquid store (18), the liquid sensor (14), the electronic control (3) and the alarm device, **in that** the housing has two housing parts (1, 2) which are substantially the same in their outer contour and which are designed so that in the closed position the housing has an opening (17) to accommodate the pipe section which is to be held, **in that** the intermediate liquid store (18) is arranged at the opening (17) and is in contact with the liquid sensor (14) and **in that** the internal cross section of the opening (17) is of such dimensions that the apparatus can be mounted to be longitudinally movable along a pipe (12) which is to be monitored.

2. Apparatus according to claim 1, **characterised in that** the housing parts (1, 2) are joined together by a hinge (15) at one end and on the side remote from the hinge (15) they have dish-shaped recesses (5, 6) which form the opening (17) when the housing is in the closed position and **in that** the intermediate liquid store (18) is disposed inside the dish-shaped recesses (5, 6) which comprise the opening (17).

3. Apparatus according to claim 1 or 2, **characterised in that** the holder for connecting the apparatus (100) to the pipe (12) which is to be monitored is constructed to fit round the pipe in the manner of a clamp, shackle or sleeve.

4. Apparatus according to claim 2 or 3, **characterised in that** the interior of the housing in which the electronic control (3), optionally a battery (4) and an alarm (11) are accommodated, is sealed off to the outside by a peripheral seal (16), **in that** at least one sensor (14) is provided in the region of the dish-shaped recesses (5, 6) and **in that** screw connections or latching connections are provided for holding the housing parts (1, 2) together.

5. Apparatus according to one of claims 1 to 4, **characterised in that** the intermediate liquid store (18) is a liquid-absorbing member formed by a sponge (7) which is disposed in an annular receptacle (19) provided with openings, constructed as a protective basket (8), within the opening (17) provided for the pipe (12) which is to be monitored.

6. Apparatus according to claim 5, **characterised in that** the annular receptacle (19) is formed by two half-rings (19a, 19b) which are U-shaped in cross-section, in which the semicircular sponge pieces are held in contact at their end faces.

7. Apparatus according to claim 6, **characterised in that** the dish-shaped housing recesses (5, 6) are shaped to accommodate the half-rings (19a, 19b) of the receptacle with the sponge pieces, and **in that** at least one sensor (14) is provided in the wall of at least one of the two housing recesses (5, 6), which is in contact with a sponge member.

8. Apparatus according to claim 6 or 7, **characterised in that** the receptacle (19) which can be inserted in the dish-shaped housing recesses (5, 6) is interchangeable to adapt to different pipe diameters and **in that** a plurality of receptacles (19) with different internal diameters are provided.

9. Apparatus according to one of claims 1 to 8, **characterised in that** the sensor (14) is formed by a resistance sensor which measures the electrical resistance, comprising at least two spaced-apart electrodes (9, 10) in contact with the intermediate liquid store (18).

10. Apparatus according to claim 9, **characterised in that** the two electrodes (9, 10) of the resistance sensor are arranged substantially diametrically opposite in the wall of one of the dish-shaped housing recesses (5, 6).

11. Apparatus according to one of claims 1 to 10, **characterised in that** it comprises a connection for an external current supply and/or for an external alarm device.

## Revendications

1. Dispositif (100) de surveillance, en ce qui concerne les fuites des conduites transportant des liquides, lequel comporte un support avec une ouverture de passage (17) pour la conduite (12) à surveiller et lequel a un réservoir intermédiaire (18) destiné aux liquides pouvant être placé côté extérieur sur la conduite (12) ainsi qu'un capteur de liquide (14) qui est relié à une électronique de commande (3) et celle-ci à un dispositif d'alarme, **caractérisé en ce que** le dispositif (100) est conçu comme un petit appareil mobile et/ou portatif avec un boîtier, dans lequel sont logés au moins le réservoir intermédiaire (18) destiné aux liquides, le capteur de liquide (14), l'électronique de commande (3) ainsi que le dispositif d'alarme, **en ce que** le boîtier comporte des parties (1, 2) de boîtier à peu près identiques dans leur contour extérieur, lesquelles sont réalisées de telle sorte que le boîtier a, en position fermée, une ouverture de passage (17) pour recevoir la section de conduite à entourer, **en ce que** le réservoir intermédiaire (18) destiné aux liquides est disposé près de l'ouverture de passage (17) et est en contact avec le capteur de liquide (14), et **en ce que** la section intérieure de l'ouverture de passage (17) est dimensionnée de telle façon que le dispositif (100) peut être monté de manière mobile longitudinalement sur une conduite (12) à surveiller.

2. Dispositif selon la revendication 1, **caractérisé en ce que** les parties de boîtier (1, 2) sont reliées l'une à l'autre à une extrémité par le biais d'une charnière basculante (15) et comportent du côté opposé à la charnière basculante (15) respectivement des creux (5, 6) en forme de cuvette, lesquels en position fermée du boîtier forment l'ouverture de passage (17), et **en ce que** le réservoir intermédiaire (18) destiné aux liquides est disposé à l'intérieur des creux (5, 6) en forme de cuvette, comportant l'ouverture de passage (17).

3. Dispositif selon la revendication 1 ou 2, **caractérisé en ce que** le support pour relier le dispositif (100) à la conduite (12) à surveiller est réalisé de manière à entourer celle-ci tel une pince, une bride, ou une manchette.

4. Dispositif selon la revendication 2 ou 3, **caractérisé en ce que** l'intérieur du boîtier, dans lequel sont logés l'électronique de commande (3), le cas échéant une batterie (4), ainsi qu'un avertisseur (11), est étanché vers l'extérieur par un joint circulaire (16), **en ce que** au moins un capteur (14) est disposé dans la zone des creux (5, 6) en forme de cuvette et **en ce que** des raccords à vis ou des raccords par encliquetage sont prévus pour tenir ensemble les pièces de boîtier (1, 2).

5. Dispositif selon l'une des revendications 1 à 4, **caractérisé en ce que** le réservoir intermédiaire (18) destiné aux liquides est un élément d'absorption d'humidité formé par une éponge (7), lequel est disposé dans un élément de réception (19) comportant des ouvertures annulaires et réalisé comme panier protecteur (8) à l'intérieur de l'ouverture de passage (17) prévue pour la conduite (12) à surveiller.

6. Dispositif selon la revendication 5, **caractérisé en ce que** l'élément de réception (19) en forme d'anneau est formé par deux demi-anneaux en forme de U vus en coupe (19a, 19b), dans lesquels sont tenues les parties d'éponge respectivement en forme de demi-cercle, se touchant à leurs extrémités frontales.

7. Dispositif selon la revendication 6, **caractérisé en ce que** les creux du boîtier (5, 6) en forme de cuvette sont façonnés avec les parties d'éponge pour recevoir les demi-anneaux de l'élément de réception (19a, 19b), et **en ce que** au moins un capteur (14) est prévu dans la paroi d'au moins un des deux creux du boîtier (5, 6), lequel est en contact avec une partie d'éponge.

8. Dispositif selon la revendication 6 ou 7, **caractérisé en ce que** l'élément de réception (19) pouvant être placé dans les creux (5, 6) du boîtier en forme de cuvette est interchangeable comme adaptateur pour différents diamètres de conduite et **en ce que** plusieurs éléments de réception (19) sont prévus avec différents diamètres intérieurs.

9. Dispositif selon l'une des revendications 1 à 8, **caractérisé en ce que** le capteur (14) est formé par un capteur de résistance mesurant la résistance électrique, .lequel comporte au moins deux électrodes (9, 10), à distance l'une de l'autre, étant en contact avec le réservoir intermédiaire (18) destiné aux liquides.

10. Dispositif selon la revendication 9, **caractérisé en ce que** les deux électrodes (9, 10) du capteur de résistance sont disposées de manière diamétralement .opposée dans la paroi d'un des creux du boîtier (5, 6) en forme de cuvette.

11. Dispositif selon l'une des revendications 1 à 10, **caractérisé en ce qu'**il comporte un raccord pour une alimentation externe en courant électrique et/ou pour un dispositif d'alarme externe.
